# EUROPÄISCHE PATENTSCHRIFT

(11) **EP 2 289 296 B1**
(45) Veröffentlichungstag und Bekanntmachung des Hinweises auf die Patenterteilung: **01.05.2013**
(21) Anmeldenummer: 10007651.2
(22) Anmeldetag: 23.07.2010
(51) Int. Cl.: A01B 63/14, A01B 3/46

(54) **Aufsatteldrehpflug mit Traktionsverstärker**
Semi-mounted reversible plough with traction increase
Charrue réversible semi-portée avec amplificateur de traction

(30) Priorität: 01.08.2009 DE 102009035835
(43) Veröffentlichungstag der Anmeldung: 02.03.2011
(73) Patentinhaber: Lemken GmbH & Co. KG, 46519 Alpen (DE)
(72) Erfinder: Terboven, Johannes, 46519 Alpen (DE)

(56) Entgegenhaltungen:
- WO-A1-2004/032601
- FR-A- 1 122 757
- US-A- 2 312 258
- US-A- 3 182 730

## Beschreibung

Die Erfindung betrifft einen Aufsatteldrehpflug gemäß dem Oberbegriff des Anspruches 1.

Es sind verschiedene Lösungen bekannt, mit denen die Traktion des Traktors in Verbindung mit Aufsatteldrehpflügen dadurch verbessert wird, in dem Vorrichtungen am Aufsatteldrehpflug vorgesehen wurden, die eine Erhöhung der Zugkraft im Oberlenker des Traktors erzeugen. Durch die Erzeugung einer Zugkraft im Oberlenker wird Gewicht vom Gerät und auch Gewicht von der Vorderachse des Traktors auf die Hinterachse des Traktors übertragen. Diese Art Erhöhung der Hinterachslast des Traktors führt in der Regel zu einer Erhöhung der Traktion des Traktors.

Ein derartiger Aufsatteldrehpflug ist der europäischen Patentschrift EP 1 549 124 zu entnehmen. Bei diesem Aufsatteldrehpflug befindet sich zwischen der Anbauvorrichtung und dem Pflugrahmen ein Hydraulikzylinder. Mit diesem Hydraulikzylinder soll die Traktion des Traktors verbessert werden. Soll die Vorderachse des Traktors zusätzlich belastet werden, wird im Oberlenker des Traktors über den Hydraulikzylinder eine Druckkraft erzeugt. Soll die Hinterachse des Traktors belastet werden, lehrt diese EP 1 549 124, dass dann im Oberlenker des Traktors eine Zugkraft erzeugt werden muss. Somit kann je nach Bedarf entweder eine Zugkraft im Oberlenker erzeugt werden oder aber auch eine Druckkraft.

Dieser Stand der Technik hat den Nachteil, dass er wegen der hydraulischen Bauteile relativ aufwendig ist und teuer.

Ein weiterer vergleichbarer Aufsatteldrehpflug ist der EP 2 033 503 zu entnehmen. Wie bei dem Aufsatteldrehpflug gemäß der EP 1 549 124 ist auch hier ein Hydraulikzylinder vorgesehen, mit dem Zugkraft im Oberlenker erzeugt werden muss, wenn die Traktion der Hinterachse des Traktors verbessert werden soll. Hier bestehen die gleichen Nachteile wie bei dem Gegenstand der EP 2 033 503.

Eine weitere Lösung war die, anstatt eines traktorseitigen Standardoberlenkers einen pflugseitigen Hydraulikzylinder als Oberlenker gemäß der deutschen Offenlegungsschrift DE OS 1 920 899 vorzusehen, der mit Öldruck über die Regelhydraulik des Traktors beaufschlagt wurde. Dies sollte zu einer Traktionsverstärkung des Traktors führen. Die unabgestimmte Abhängigkeit von der Regelhydraulik des Traktors muss Ursache dafür gewesen sein, dass sich diese Lösung nicht durchgesetzt hat.

Dem europäischen Patent EP 1 082 888 ist ein Aufsatteldrehpflug zu entnehmen, der einen Dreipunktturm mit weit hinter dem Dreipunktturm angeordneter Querachse aufweist. Der Pflugrahmen stützt sich dabei mittelbar auf die Querachse ab und erzeugt so eine Zugkraft im traktorseitigen Oberlenker. Die Querachse ist dabei in einem sehr großen Abstand hinter dem Dreipunktturm angeordnet, so dass aufgrund des großen Abstandes zwischen Dreipunktturm und Querachse bereits kleine Abstützkräfte eine große Zugkraft im Oberlenker des Traktors erzeugen und damit auch für eine gute Traktion des Traktors sorgen. Über ein in seiner Abstützwirkung einstellbares Tastrad bzw. Stützrad kann hier die Abstützkraft des Pflugrahmens auf die Querachse eingestellt bzw. vergrößert werden und damit auch die Zugkraft im Oberlenker und die Traktion des Traktors. Bei einer gering eingestellten Abstützkraft des Tastrades entsteht eine große Zugkraft im Oberlenker und damit auch eine deutliche Erhöhung der Traktion des Traktors. Diese Traktion wird aber deutlich reduziert, wenn das Tastrad so eingestellt wird, dass eine hohe Abstützkraft erzeugt wird. Da das Tastrad auch die Funktion beinhaltet, die Arbeitstiefe des vorderen Pflugrahmens zu begrenzen, kann nicht in allen Bedingungen die Traktion wie gewünscht vergrößert werden.

Aufgabe der Erfindung ist es, einen Aufsatteldrehpflug mit Traktionsverstärker zu schaffen, der einfach aufgebaut ist, der einfach und sicher zu bedienen ist, bei dem während der Kehrfahrt auf dem Vorgewende nur geringe Zugkräfte oder Druckkräfte im Oberlenker auftreten und für den möglichst wenig Steuergeräte am Traktor erforderlich sind.

Die Aufgabe wird gemäß dem kennzeichnenden Teil des Anspruchs 1 gelöst.

Durch die besondere Anordnung des Zuglenkers in Verbindung mit dem Führungsgetriebe wird die Traktion des Traktors erhöht. Der Aufsattelpflug wird praktisch nur über den Zuglenker gezogen. Die Traktionserhöhung ist insbesondere dann groß, wenn auch mehr Zugkraft benötigt oder erzeugt wird. Der Zuglenker ist dabei so angeordnet, dass der Oberlenker des Traktors so mit Zugkräften beaufschlagt wird, dass eine deutliche Traktionsverstärkung erzielt wird, dass aber die Vorderachse des Traktors nicht zu sehr entlastet wird und damit die Lenkbarkeit des Traktors immer sichergestellt ist. Während der Kehrfahrt auf dem Vorgewende ist die Zugkraft im Zuglenker sehr gering; es werden demnach auch keine störenden Kipp- oder Verdrehkräfte auf das Dreipunktgestänge des Traktors und damit auf den Traktor selbst übertragen.

Die Erfindung sieht weiter vor, dass der Abstand zwischen der Zugrichtung des Zuglenkers und der Verbindungslinie der Anbaupunkte für die Unterlenker des Traktors veränderbar ausgebildet ist.

Durch die Veränderung des Abstandes der Zugrichtung des Zuglenkers zu den Anbaupunkten der Unterlenker wird auch der wirksame Hebelarm des Zuglenkers verändert und damit auch die Zugkraft im Oberlenker des Traktors und eine Veränderung der Traktion. Wird der Abstand vergrößert, vergrößert sich auch die Traktion des Traktors. Wird der Abstand verringert, verringert sich die Traktion der Traktorhinterachse; die Traktion der Traktorvorderachse erhöht sich dabei gleichzeitig. Wird der Abstand so verringert, dass die Zugrichtung des Zuglenkers unterhalb der Anbaupunkte der Unterlenker verläuft, wird die Hinterachse des Traktors geringer belastet oder sogar entlastet und die Vorderachse des Traktors belastet. Es gibt Einsatzfälle, z.B. in Verbindung mit Raupentraktoren, wo eine solche Konstellation der Achslasten vorteilhaft sein kann.

Erfindungsgemäß ist weiter vorgesehen, dass ein Zwischenrahmen vorgesehen ist, der über die Querachse mit dem Zwischenstück und über Lenker, die hintereinander angeordnet sind und das Führungsgetriebe bilden, drehfest und annähernd in Längsrichtung des Tragrahmens parallel verschiebbar mit dem Vorderteil des Tragrahmens verbunden ist.

Der Tragrahmen und damit auch der Pflugrahmen ist so in Längsrichtung frei beweglich parallel, dreh- und tiefengeführt mit der Querachse verbunden. Zugkräfte werden nur über den Zuglenker übertragen. Bodenunebenheiten werden dadurch ausgeglichen, dass die Lenker etwas nach vorne oder nach hinten schwenken und so eine Nickbewegung des Anbauturmes in Relation zum Tragrahmen oder Pflugrahmen zulassen.

Die Erfindung sieht weiter vor, dass der Zwischenrahmen über eine parallele Schiebeführung als Führungsgetriebe drehfest und annähernd in Längsrichtung des Tragrahmens parallel verschiebbar mit dem Vorderteil des Tragrahmens verbunden ist.

Im Vergleich zu dem Einsatz von Lenkern als Parallelführung ist eine Schiebeführung einfacher ausgebildet, leichter und kostengünstiger.

Erfindungsgemäß ist auch vorgesehen, dass der Abstand zwischen der Zugrichtung des Zuglenkers zu der Verbindungslinie der Anbaupunkte der Unterlenker des Traktors über eine Regeleinrichtung so anpassbar ausgebildet ist, dass die Zugkraft im Oberlenker des Traktors während der Pflugarbeit in allen Arbeitssituationen möglichst hoch und konstant ist.

Wenn die Zugkraft im Oberlenker konstant gehalten wird, kann permanent mit der größtmöglichen Traktion gearbeitet werden. Eine z. B. zu große Entlastung der Vorderachse und damit ein Verlust der Lenkbarkeit des Traktors sind so nicht zu befürchten.

Weitere Einzelheiten der Erfindung sind den Figuren und der Figurenbeschreibung zu entnehmen.
Figur 1 zeigt eine Draufsicht des Aufsatteldrehpfluges und
Figur 2 zeigt Einzelheiten des Traktionsverstärkers

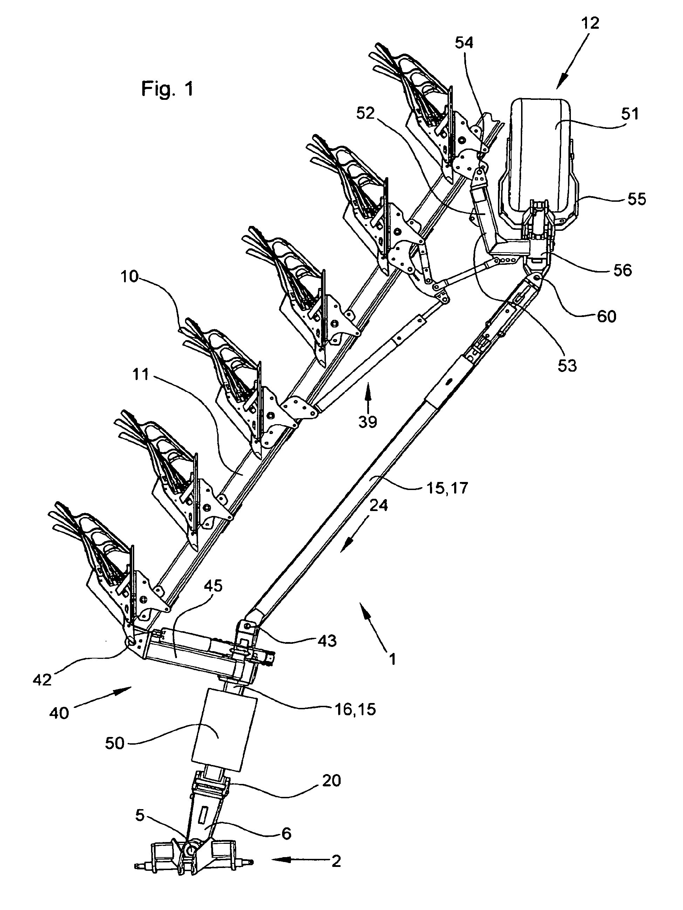

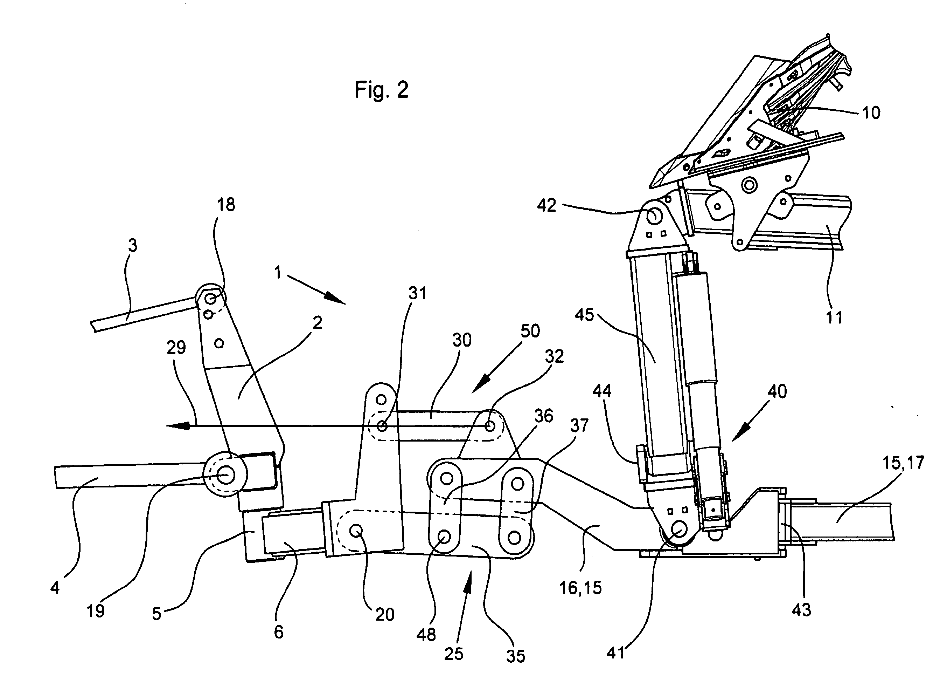

Figur 1 zeigt eine Draufsicht des Aufsatteldrehpfluges 1, der einen Anbauturm 2 aufweist, mit dem er mit dem Oberlenker 4 und den Unterlenkern 3 eines nicht dargestellten Traktors verbunden wird. Um die aufrechte Achse 5 des Anbauturmes 2 kann der Tragrahmen 15 und damit auch der Pflugrahmen 11 frei schwenken. Hinter der aufrechten Achse 5 ist das Zwischenstück 6 angeordnet, das eine Querachse 20 aufweist, mit der der mehrteilige Tragrahmen 15 mittelbar verbunden ist. Der mehrteilige Tragrahmen 15 besteht hier unter anderem aus dem Stabilisator 17, dem Vorderteil 16 des Tragrahmens 15 und auch aus dem daran angrenzenden Traktionsverstärker 50. Einzelheiten zu dem Traktionsverstärker 50 sind der Figur 2 zu entnehmen. Mit dem Vorderteil 16 ist das Drehwerk 40 über das quer angeordnete Verbindungsgelenk 41 verbunden. Dies ist insbesondere der Figur 2 zu entnehmen. Das Drehwerk 40 ist über den Wendelenker 45 und dem Verbindungsgelenk 42 mit dem Pflugrahmen 11 verbunden. Über die aufrechte Verbindungsachse 43 ist der Stabilisator 17 vorne mit dem Vorderteil 16 des Tragrahmens 15 verbunden. Hinten ist der Stabilisator 17 über die aufrechte Verbindungsachse 60 mit dem Fahrwerk 12 verbunden, das aus dem Rad 51, der Radgabel 55 und dem Tragarm 52 besteht. Der Tragarm 52 ist hinten über die Achse 54 mit dem Pflugrahmen 11 und im vorderen Bereich 53 über die Schwenklagerung 56 mittelbar mit dem Stabilisator 17 des Tragrahmens 15 verbunden. Der Stabilisator 17 hält das Rad 51 in seine aufrechte Position. Der Tragarm 52 ist im vorderen Bereich 53 mit dem Verstellgetriebe 39 verbunden.

Über das Verstellgetriebe 39 wird die Arbeitsbreite des Aufsatteldrehpfluges 1 verändert. Der Pflugrahmen 11 weist mehrere Pflugkörperpaare auf, wovon in der Figur 1 nur ein Pflugkörper 10 vereinfacht dargestellt ist.

Figur 2 zeigt Einzelheiten über den Traktionsverstärker 50 und auch über den vorderen Bereich des Aufsatteldrehpfluges 1. Der Pflugrahmen 11 mit dem angedeuteten Pflugkörper 10 und damit auch der über das Verbindungsgelenk 42 mit dem Pflugrahmen verbundene Wendelenker 45 des Drehwerks 40 befinden sich um ca. 90° um die Drehachse 44 gedreht in der mittleren Drehposition, der Transportstellung. Das Drehwerk 40 stützt sich über das quer angeordnete Verbindungsgelenk 41 auf das Vorderteil 16 des Tragrahmens 15 ab. Das Vorderteil 16 des Tragrahmens 15 stützt sich über die Lenker 36 und 37 auf den Zwischenrahmen 35 ab, der wiederum über die Querachse 20 mit dem Zwischenstück 6 verbunden ist. Die parallele Anordnung der Lenker 36 und 37 sorgt dafür, dass der Zwischenrahmen 35 parallel zum Vorderteil 16 des Tragrahmens 15 drehfest und frei schwenkbar annähernd in Längsrichtung 24 des Tragrahmens geführt ist. Sie bilden praktisch ein Führungsgetriebe 25, das keine Zugkräfte übertragen kann. Zugkräfte werden nur über den Zuglenker 30 übertragen, das das Zwischenstück 6 und das Vorderteil 16 des Tragrahmens 15 miteinander verbindet. Denkbar ist auch eine freie Schwenkbarkeit in Pflugrichtung, was dann keinen Einfluss auf die Arbeitsbreite des ersten Pflugkörpers hat, wenn der Schwenkbereich in unebenem Gelände übermäßig groß ist.

Die Zugrichtung 29 der Zugkräfte im Zuglenker 30 verläuft oberhalb der Verbindungslinie der Anbaupunkte 19 für die Unterlenker 4 des Traktors und unterhalb der Anbaupunkte 18 für den Oberlenker 3 des Traktors. Dadurch wird der Anbauturm 2 im Bereich des Anbaupunktes 18 nach hinten gezogen und Zugkräfte im Oberlenker 3 erzeugt, die zu einer Belastung der Hinterachse des Traktors führen und damit auch zu einer Vergrößerung der Traktion des Traktors. Diese Vergrößerung der Traktion, die Traktionsverstärkung, kann verändert werden, wenn der Oberlenker 3 des Traktors mit einem tieferen oder auch einen höheren Anbaupunkt 18 oder der Abstand der Zugrichtung 29 des Zuglenkers 30 zu den Anbaupunkten 19 durch Verändern der Lage des Zuglenkers 30 verändert wird. Dazu muss dann die Lage der Gelenke 31 oder 32 des Zuglenkers 30 verändert werden. Die Lage der Gelenke 31 oder 32 kann auch traktionsabhängig so geregelt angepasst werden, dass die Zugkraft im Oberlenker 3 sehr hoch und konstant gehalten wird oder je nach Gelände- und Bodenanforderung automatisch optimiert wird. Dies geschieht dann z.B. mit den heute üblichen GPS- oder DGPS Systemen, mit denen abhängig von den jeweils in das System eingegebenen Felddaten punktgenau alle erforderlichen Einstellungen bestimmt und durchführt werden können.

## Patentansprüche

1. Aufsatteldrehpflug (1) mit einem Anbauturm (2) für den Anbau des Aufsatteldrehpfluges (1) an das Dreipunktgestänge eines Traktors mit Oberlenker (3) und Unterlenker (4), wobei der Anbauturm (2) die Anbaupunkte (18) für den Oberlenker (3) und die Anbaupunkte (19) für die Unterlenker (4) aufweist und um die aufrechte Achse (5) mit einem Zwischenstück (6) schwenkbar verbunden ist, sowie mit einem die Pflugkörper (10) tragenden Pflugrahmen (11), der über ein Fahrwerk (12) mit Tragrahmen (15) auf dem Boden abgestützt wird, wobei zwischen dem Vorderteil (16) des Tragrahmens (15) und dem Zwischenstück (6) eine Querachse (20) angeordnet ist, um die der Tragrahmen (15) und damit auch der Pflugrahmen (11) gegenüber dem Zwischenstück (6) und dem Anbauturm (2) in vertikaler Richtung vertikal schwenkbar verbunden ist,
**dadurch gekennzeichnet,**
**dass** das Vorderteil (16) des Tragrahmens (15) zum Zwischenstück (6) über ein Führungsgetriebe (25), das hinter der Querachse (20) angeordnet ist, drehfest und annähernd in Längsrichtung (24) des Tragrahmens (15) parallel verschiebbar geführt ist, dass ein die Zugkräfte übertragener Zuglenker (30) vorgesehen ist, der oberhalb der Querachse (20) angeordnet ist und über Gelenke (31, 32) sowohl mit dem Zwischenstück (6) als auch mit dem Vorderteil (16) des Tragrahmens (15) verbunden ist, wobei die Zugrichtung (29) des Zuglenkers (30) oberhalb der Anbaupunkte (19) liegt und der Zuglenker (30) in Abhängigkeit von der aktuellen Zugkraft des Traktors den Oberlenker (3) des Traktors mit Zugkraft beaufschlagend ausgebildet ist.

2. Aufsatteldrehpflug nach Anspruch 1,
**dadurch gekennzeichnet,**
**dass** der Abstand zwischen der Zugrichtung (29) des Zuglenkers (30) und der Verbindungslinie der Anbaupunkte (19) für die Unterlenker (4) des Traktors veränderbar ausgebildet ist.

3. Aufsatteldrehpflug nach Anspruch 1 bis 2,
**dadurch gekennzeichnet,**
**dass** ein Zwischenrahmen (35) vorgesehen ist, der über die Querachse (20) mit dem Zwischenstück (6) und über die Lenker (36, 37), die hintereinander angeordnet sind und das Führungsgetriebe (25) bilden, drehfest und annähernd in Längsrichtung (24) des Tragrahmens (15) parallel verschiebbar mit dem Vorderteil (16) des Tragrahmens (15) verbunden ist.

4. Aufsatteldrehpflug nach Anspruch 1 bis 3,
**dadurch gekennzeichnet,**
**dass** der Zwischenrahmen (35) über eine parallele Schiebeführung als Führungsgetriebe (25) drehfest und annähernd in Längsrichtung (24) des Tragrahmens (15) parallel verschiebbar mit dem Vorderteil (16) des Tragrahmens (15) verbunden ist.

5. Aufsatteldrehpflug nach Anspruch 1 bis 4,
**dadurch gekennzeichnet,**
**dass** der Abstand zwischen der Zugrichtung (29) des Zuglenkers (30) und der Verbindungslinie der Anbaupunkte (19) der Unterlenker (4) des Traktors über eine Regeleinrichtung so anpassbar ausgebildet ist, dass die Zugkraft im Oberlenker (3) des Traktors während der Pflugarbeit in allen Arbeitssituationen möglichst hoch und annähernd konstant ist.

## Claims

1. Semi-mounted reversible plough (1) with a headstock (2) for the attachment of the semi-mounted reversible plough (1) to the three-point linkage of a tractor with top link (3) and lower link (4), whereby the headstock (2), the attachment points (18) for the top link (3) and the attachment points (19) for the lower link (4) and about an upright axis (5) with an intermediate piece (6) is pivotally connected, and with a plough frame (11) carrying the plough bodys (10) which is supported on the ground using an axle (12) with a support frame ,whereby a transverse axis (20) is arranged between the front part (16) of the support frame (15) and the intermediate piece (6) about which the support frame (15) and thus also the plough frame (11) relative to the intermediate piece (6) and the headstock (2) is connected in the vertical direction to pivot vertically,
**characterized in**
**that** the front part (16) of the support frame (15) to the intermediate piece (6) can be moved via a guide mechanism (25), which is behind the transverse axis (20) rotationally fixed and substantially in the longitudinal direction (24) of the support frame (15) is guided displaceable in parallel that a tensile forces transferring connecting rod (30) is provided, which is located above the transverse axis (20) and connected by joints (31, 32) with both the intermediate piece (6) and with the front part (16) of the support frame (15), whereby the pulling direction (29) of the connecting rod (30) is located above the attachment points (19) and the connecting rod (30) in response to the current traction force of the tractor is designed to load the top link (3) of the tractor with traction force.

2. Semi-mounted reversible plough according to claim 1,
**characterized in**
**that** the distance between the pulling direction (29) of the connecting rod (30) and the line connecting the attachment points (19) for the lower link (4) of the tractor is designed to be variable.

3. Semi-mounted reversible plough according to claim 1 to 2,
**characterized in**
**that** an intermediate frame (35) is provided, which is connected by the transverse axis (20) to the intermediate piece (6) and by the connecting rods (36, 37) which are arranged behind one another building a guiding mechanism, which is connected rotationally fixed and approximately in the longitudinal direction (24) of the support frame (15), and displaceable in parallel and with the front part (16) of the support frame (15).

4. Semi-mounted reversible plough according to claim 1 to 3,
**characterized in**
**that** the intermediate frame (35) via a parallel sliding guide is connected rotationally fixed and approximately in the longitudinal direction (24) of the support frame (15), and displaceable in parallel and with the front part (16) of the support frame (15).

5. Semi-mounted reversible plough according to claim 1 to 4,
**characterized in**
**that** the distance between the pulling direction (29) of the connecting rod (30) and the line connecting the attachment points (19) of the lower link (4) of the tractor is designed to be adapted by a control means that the pulling force in the top link (3) of the tractor during ploughing in all work situations is as high as possible and approximately constant.

## Revendications

1. Charrue réversible semi-portée (1) avec tête d'attelage (2) pour l'attelage de la charrue réversible semi-portée (1) au relevage hydraulique d'un tracteur doté de troisième point (3) et des bras inférieurs (4), sur lequel la tête d'attelage (2), les points d'attelage (18) pour le troisième point (3) et les points d'attelage (19) pour les bras inférieurs (4) et autour de l'axe vertical (5) avec une pièce intermédiaire (6) est relié de façon pivotante, et avec un cadre de charrue (11) portant les corps charrue (10), le cadre doté d'un chariot (12) avec cadre porteur (15) est supporté sur le sol, grâce à quoi un axe transversal (20) est disposé entre la partie avant (16) du cadre porteur (15) et la pièce intermédiaire (6) autour duquel le cadre porteur (15) et donc également le cadre de charrue (11) par rapport à la pièce intermédiaire (6) et la tête d'attelage (2) est relié à la direction verticale à pouvoir pivoter verticalement,
**caractérisé en ce**
**que** la partie avant (16) du cadre porteur (15), de la pièce intermédiaire (6) peut être déplacée par l'intermédiaire d'un mécanisme de guidage (25), qui est en arrière de l'axe transversal (20) et solidaire en rotation et pratiquement dans la direction longitudinale (24) du cadre porteur (15) est guidé déplaçable en parallèle qu'un transfert de forces de traction de tirant (30) est prévu, qui est situé au-dessus de l'axe transversal (20) et lié par des articulations (31, 32) tant avec le pièce intermédiaire (6) et avec la partie avant (16) du cadre porteur (15), grâce à quoi la direction de traction (29) de tirant (30) est situé au-dessus des points d'attelage (19) et le tirant (30) en réponse à la force de traction du tracteur de actuelle est conçu pour charger le troisième point (3) du tracteur avec une force tirant

2. Charrue réversible semi-portée selon la revendication 1,
**caractérisé en ce**
**que** la distance entre la direction de traction (29) de le tirant (30) et la ligne reliant les points d'attelage (19) pour les bras inférieur (4) du tracteur est conçu pour être variable.

3. Charrue réversible semi-portée selon la revendication 1 à 2,
**caractérisé en ce**
**qu** 'un cadre intermédiaire (35) est prévu, qui est relié par l'axe transversal (20) de la pièce intermédiaire (6) et par des bielles (36, 37) qui sont disposés l'un derrière l'autre d'un mécanisme de guidage de la construction, ce qui est reliée solidairement en rotation et pratiquement dans la direction longitudinale (24) du cadre porteur (15), et pouvant être déplacé en parallèle et avec la partie avant (16) du cadre porteur (15).

4. Charrue réversible semi-portée selon la revendication 1 à 3,
**caractérisé en ce**
**que** le cadre intermédiaire (35) par l'intermédiaire d'un guidage parallèle coulissant est relié fixe en rotation et à pratiquement dans la direction longitudinale (24) du cadre porteur (15), et pouvant être déplacé en parallèle et avec la partie avant (16) du cadre porteur (15).

5. Charrue réversible semi-portée selon la revendication 1 à 4,
**caractérisé en ce**
**que** la distance entre la direction de traction (29) de le tirant (30) et la ligne reliant les points d'attelage (19) pour les bras inférieur (4) du tracteur est conçu pour être adapté par un moyen de commande que la force de traction dans le troisième point (3) du tracteur pendant le labour dans toutes les situations de travail est la plus élevée possible et pratiquement constante.
